# EUROPEAN PATENT APPLICATION

(11) **EP 2 028 819 A1**
(43) Date of publication of application: **25.02.2009**
(21) Application number: 08156764.6
(22) Date of filing: 22.05.2008
(51) Int. Cl.: H04L 29/06

(54) **A system for packet interactive multimedia response (PIM2R) and a method of performing the same**

(30) Priority: 22.05.2007 IN MU09572007
(71) Applicant: Tata Consultancy Services Limited, Mumbai 400001 (IN)
(72) Inventor: Madhukar, Kibahune Sanjay Tata C. S. Ltd., Pokhran Rd. No. 2 Thane 400 601, Maharashtra (IN)
(74) Representative: Ablett, Graham Keith

(57) **Abstract**

A system for Packet Interactive Multimedia Response (PIM2R)and a method of performing the same are provided. The system comprises:-
(a) playback means for voice/text/multimedia menu to select, distinguish, and segregate different types of queries (1);
(b) input means for accepting inputs at the user end (2);
(c) query formulation means at the user end (3);
(d) transmitter means at the user-end to transmit the formulated query (4);
(e) receiver means at the server-end to receive the formulated query (5);
(f) interface means to enable connectivity between the transmitter and receiver ends (6);
(g) processing means at the server end for executing the query, obtain appropriate results and sending it back to user end (7) ;
(i) conversion means at the server end or users end to convert the results of the query in a voice/text/multimedia signal format (8); and
(j) playback means at the user end to relay the results to the user.

## Description

### Field of invention:

The invention relates to data transfer.
Particularly, this invention relates to Interactive Voice Response available through wireless and wired networks.

### Background of the invention:

Interactive Voice Response (IVR) is an electronic system that provides voice response to a user's query initiated via a telephone. The telephone can be a landline phone or a mobile phone. Conventional IVR system comprises a computer with IVR software. The computer may house a telephony interface card. IVR services can be availed by standard wired phones or mobiles. A standard wired phone (Landline phone) has limited/no intelligence and very limited signaling capacity i.e. landline phone can pass digits [(0 to **9),*, #]** by generating Dual Tone Multi Frequency (DTMF) tones. Thus very limited functionality can be provided to a user.

Mobile phones have comparatively more intelligence, memory capability and support more exhaustive communication and signaling methodologies (TCP *1* IP, SIP and the like). Additionally, the mobile infrastructure permits download of applications over the air to the mobile phone.

Conventionally, IVR plays voice menus to users, accepts inputs from the users and provides appropriate response in a voice format. The voice menus - (prompts) are stored on a computer (IVR server) remotely located from the user. These prompts are streamed to the client in real time thus necessitating:
1) Availability of several hardware *1* software ports for connecting to client, and hence, demanding for more computing power and network resources.
2) Establishment of continuous connection with a server, again consuming considerable computing and voice call transportation resources.

Following are the disadvantages for the conventional IVRs used:
- Call is circuit switched, when the call is answered one unit is charged, whether the bandwidth is used or not.
- Telephony cards are required, hence there is a limitation on number of simultaneous calls handled, and cards are costly.
- Calls are long and hence expensive to retrieve detailed information.
- Response is voice only.
- Hosting services in multiple languages is costly.
- Overall cost to the customer is more.
- Phone has limited capability.
   This limits the effectiveness of the prior art system.

Some of the systems disclosed in the prior art are mentioned below:
US Patent Application No. 200301 12931 describes a system and method for facilitating navigation of IVR menu in which is disclosed the mapping of IVR menu options in textual or graphical format. However, this does not extend to presentation on voice menus in voice format.
US Patent Application No. 20030074198 discloses the selection and display of text menu by converting audio IVR menus to a text menu. However, this does not extend beyond text menus.

US Patent No. 7092702 discloses a generalized application framework post production of a mobile phone and talks of cable loading the application to a mobile phone delivering service centric functionality. This invention does not extend to generating voice-based results for a query. The basic mode of transfer of queries is step by step not saving significantly on time.

European application EP1874018 discloses a method for transmission of audio and visual content to a portable communication device with an Interactive voice response system guiding the user through a voice/ audio menu. The content is similar to markup language specification (VoiceXML). The system comprises an interactive voice response server for generating the audio menu and the content to be sent to the subscriber, a transmitting means, a receiving means, a reproducing and synchronizing means at the subscriber end wireless device for providing the content. Packet data stack is implemented in said system.

US patent number US6788770 describes a system for providing predetermined services through a PSTN coupled with an IVR unit is disclosed in this patent. The system implements only voice response and handles voice content only and does not support multimedia content or responses.

US patent number US6804333 discloses a system and method that manages a connection between a plurality of data networks and telephone interfaces. Each user has a profile associated with him; said profiles include service identifiers or agents. This system also uses PSTN and internet for providing the services and data to the user. This invention provides only voice responses to the queries of the users.

US patent number US7068643 describes an interactive voice response system implemented by means of internet as the data transfer network. This system also uses VoiceXML along with HTTP for the voice response and content transmission.

US patent number US7263177 describes a system provided with two voice response systems, one for receiving a call from the user and to provide information through voice/ audio response and second one for providing additional media services like speech recognition and text to speech conversion. This system is also implemented by a PSTN links. This system also provides only voice/ audio response to the user's queries and does not support multimedia. The voice response system and the content is provided by means of VoiceXML and HTTP.

US patent application US2003005076 discloses a system for simultaneous visual and telephonic access to interactive information delivery. It uses the advanced intelligent network components and internet to provide interactive voice response services as well as visual responses to the queries of the user. The system uses a VoiceXML translation unit to convert speech to VXML and vice versa. This invention incorporates telephone based delivery system with that of internet based delivery system. This document has visual and voice response (VIVR) but is not compatible for response in other media.

US patent application US2005041678 discloses a system for dynamic cross network data transfer between data network and Internet protocol network. The client node solicits interaction with interactive voice response unit from the server node with a proxy server acting as a bi directional protocol gateway between the client node and IVR. The interactive response unit is hosted by a communication centre and a data packet network. This system accepts data in form of WAV file or even MPEG file.

US patent application US2007123223 envisages a system of interactive voice response for mobile phones and handheld devices. The system provides with multimedia content and responses. The system makes use of the powerful processors in present day mobile phones for providing IVR services. The system also uses WAP interface or Short service messaging.

US patent application US2008039056 discloses a system and method for providing IVR on mobile stations. It provides visual menu for voice response along with audio menu.

PCT application W00139469 discloses a method for supplying information to user on a mobile station with help of IVR server unit and using the telephone communication network. The IVR server uses the IP address of the mobile station to send the menu and response. The system may also use SMS protocol for transmitting information to the mobile station

PCT application WO014508 discloses a system and method of voice browsing on mobile terminals by IVR services. A call is connected to IVR server by means of a dual mode connection which alternately transmits voice and data via the network. The response of the user is also to be in form of voice which is further recognized to give a suitable response or information. This system is implemented using GSM network or GPRS and suitable modulation technique. This system provides only voice / audio responses.

PCT application WO03054741 facilitates voice enabled consumer transactions to provide desired information or services. The system provides means to transmit and receive voice data packets related to the information or service to the user on his mobile device. This system also makes use of the VoiceXML technology. The system transmits using networks like PSTN, cellular or packet switched network or internet. System does not support multimedia response or menu and supports only voice data and text.

The system and method envisaged in accordance with this invention aims to overcome the limitations of the prior art.

### Objects of the Invention:

One object of this invention is to exploit the enhanced capabilities of wireless and wired networks and the phone, resulting in better user experience and reduced communication cost to the client.

One more object of this invention is to provide comprehensive interactive information query system.

One more object of this invention is to make phones user-friendlier.

Another object of this invention is to add to the utility of phones.

Another object of this invention is to reduce the cost of existing information providing services.

Yet another object of this invention is to reduce traffic on communication network as well as the server.

Still another object of this invention is to optimize the use of communications network.

Still another object of this invention is to use lesser resources and investments compared to conventional systems.

An additional object of this invention is to have a system which is easy to maintain and easy to upgrade.

### Summary of the Invention:

In accordance with this invention, there is provided a system for Packet Interactive Multimedia Response (PIM2R), said system comprising of
(a) playback means for voice/text/multimedia menu to select, distinguish, and segregate different types of queries;
(b) input means for accepting inputs at the user end;
(c) Query formulation means at the user end;
(d) Transmitter means at the user-end to transmit the formulated query;
(e) Receiver means at the server-end to receive the formulated query;
(f) Interface means to enable connectivity between the transmitter and receiver ends;
(g) Processing means at the server end for executing the query and to obtain appropriate results;
(i) Conversion means at the user end or server end to convert the results of the query in a voice/text/multimedia signal format; and
(j) Playback means at the user end to relay the results to the user.

Typically, the system includes downloading means for the functionalities of a), b),c) i) & j) over the communication network to a users phone / client device / remote communication device.

Typically, the system includes an execution means for executing the functionalities of a), b), c) and i) on the phone itself.

Typically, the system includes an execution means for executing the functionality of i) on the client side application.

Typically, the system includes an Interactive voice server (IVR) to carry out the functionalities of e) and g).

Typically, the interface means is data channel communication network (CN).

Typically, the remote communication device (ClientRlser)) is a wireless phone, VOIP, satellite phone, or a mobile phone.

Typically, the user end gadget is enabled with Binary Runtime Environment for Wireless (BREW), thereby enabling downloading applications over the air.

Typically, the client connects to the server through the Hyper Text Termination Protocol (HTTP) link through the Internet.

Typically, the remote communication system comprises of Prompts and Menus Store at the client side.
Typically, the Prompts and Menus Store stores generic voice prompts and text menus in the form of a Menu Tree.

Typically, the Prompts and Menus Store receives the information from the service provider. The Prompts and Menus Store provides with the information in an already pre-loaded format.

Typically, the prompts have generic information supported by the remote communication device.

Typically, the generic information are numbers, currency, months and information requested by the server.

Typically, the system includes an application script at the client side.

Typically, the application script guides the user to acquire the required information and the actions need to be taken by the PIM2R server.

Typically, the application script acts as an interface between the user and the PIM2R system.

Typically, the system includes an PIM2R engine at the client side.

Typically, the PIM2R engine receives the menu from the server executes the application script by initiating the application thereby downloading the prompts from the user if not preloaded.

Typically, the PIM2R engine sends a query back to the PIM2R server through an HTTP link after accepting inputs from the user.
Typically, the PIM2R engine receives a response back from the PIM2R server thereby providing the response to the user, which enables playback.
Typically, the system includes a media interface.
Typically, the media interface connects the server over the Internet using the HTTP protocol and provides with session management, the HTTP being used as the transport medium.
Typically, the session management activities provided by the media interface are session establishment, tear down, encryption and the like.
Typically, the data network is the transport medium.
Typically, the system comprises of a database (D) to host and classify applications.
Typically, the system comprises of a web server (W) for interfacing the PIM2R server and the database (D).
Typically, the system includes an PIM2R server application.
Typically, the system includes a computer means for executing the PIM2R server side application software.
Typically, the PIM2R server application on receiving the request from the client interacts with an appropriate syntactically constructed database thereby executing a query.
Typically, the PIM2R server application after getting back the exact response from the database sends the reply back to the client.

Typically, the playback on the client side is local thereby enabling low call charges.
Typically, the user input is in the form of digits, letters, special characters provided by the keypad of a mobile device. Typically, the system includes selection means.
Typically, the system comprises of a PIM2R as an interface means.
Typically, the user selects a category of information based on PIM2R voice prompts.
Typically, the PIM2R application integrates in a layered format.
Typically, the PIM2R prompts are in audio/video/text/image formats.

A method for packet interactive multimedia response (PIM2R) the method comprising the steps of
(a) installing the requisite functionality of the PIM2R application on the server;
(b) downloading the PIM2R BREW client to a Binary Runtime Environment for Wireless (BREW) compatible phone which essentially downloads the PIM2R menu voice prompts and an application script;
(c) starting the BREW application on the phone;
(d) involving the user to formulate a query by accessing the multiple-layered PIM2R menu;
(e) formulating a final query based on audio/video/text inputs from the user;
(f) establishing connectivity of the BREW client application with the server via http or via sockets;
(g) collating the data entered by the user on the phone;
(l) sending the final formulated query to a database;
(m) responding to the query by the database with appropriate data;
(n) sending the data to BREW PIM2R client by the PIM2R server;
(o) displaying the data to the user by the PIM2R client application in the form of audio/video/text format; and
(p) disconnection by user.

Typically, the BREW enables the user to download applications over the air.
Typically, the generic voice prompts and text menus are provided by the prompts and menus store at the client end, the prompts and menus being pre-downloadable in a menu tree layered format.
In accordance with one embodiment of the invention, after initialization of the application the menu is locally played on the clients phone itself.
Typically, the user creates his query with the help of the interactive menu.
Typically, an HTTP link is established over a data network for sending the query created by the user to the PIM2R server.
Typically, the HTTP link is established by the media interface.
Typically, the PIM2R server receives the query from the remote communication device / user and constructs a syntactically correct database connects and corresponds with the database thereby executing the query.
Typically, the database sends the exact answer for the received query back to the PIM2R server.
Typically, the reply got from the database is validated and formatted by the PIM2R server.
Typically, this validated and formatted response is sent back to the client / remote communication device.
Typically, the client device receives the reply from the PIM2R server and converts in a understandable file / format for the user.
Typically, this file in formatted manner is played on the client device's speaker / image display for the user.
Typically, connection is terminated after he gets his expected response.
Typically, the PIM2R server application provides for the above-mentioned steps.
Typically, the PIM2R engine performs the above-mentioned steps.
Typically, the user guidance to acquire the required information and the actions that are needed to be taken by the PIM2R server are provided by the application script.
Typically, the local playback / formatting a query at the users end is done offline thereby causing a lesser telephone charge.
Typically, the data is transferred over the communication channel as data packets / files.
In accordance with one embodiment of the invention, PIM2R is hosted in multiple languages and in multiple dialects.
Typically, the method is used for searching/providing real time applications.

### Brief Description of the Accompanying Drawings:

The invention will now be described in relation to the accompanying drawings in which;
Figure 1 illustrates a method of connection and realization for a conventional IVR module;
Figure 2 illustrates a method of connection and realization for a PIM2R module in accordance with this invention;
Figure 3 illustrates the proposed architecture for realizing the envisaged functionality of PIM2R in accordance with this invention; and
Figure 4 illustrates an example for displaying and selecting a ring tone.

### Detailed Description of the Detailed Drawings:

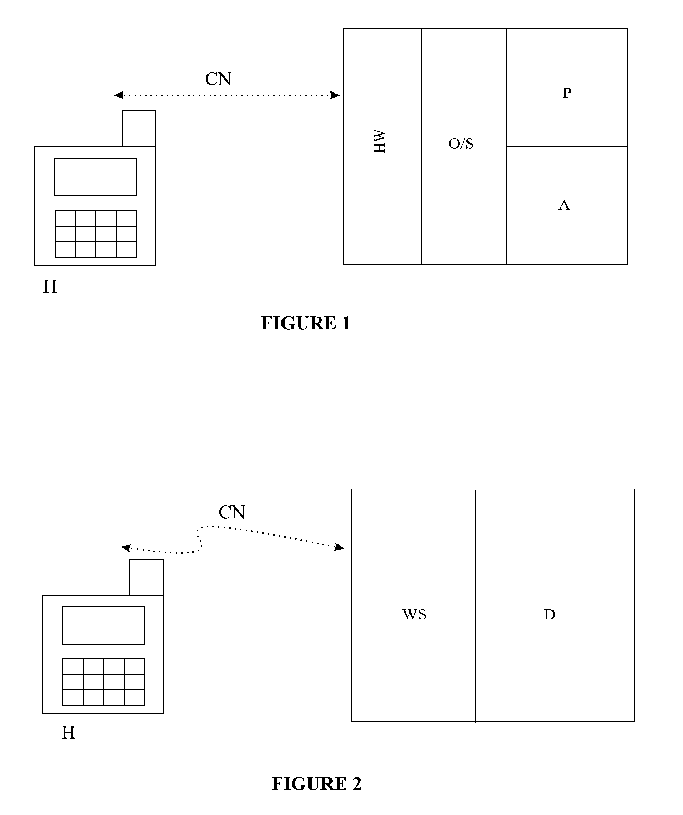

Figure 1 of the accompanying drawings illustrates a conventional Interactive Voice Response (IVR) according to the prior art. The phone (H), in this scenario includes a query formulating and transmitting means, playback means and result receiving means. The server (S) includes the query answering means. Conventional IVR comprises the following blocks:
   - Line termination card + computer (H). Telephony lines are terminated on this card.
      This card collects digits / feeds voice prompts on the telephone line and carries out the like functions.
   - Number of simultaneous calls that can be handled by IVR depends on the number of ports available on the card; this is a limiting factor for IVR.
   - IVR software (O/S) collects the inputs provided by the user (via Line termination card), acts on it, plays prompt (voice) (P), formulates database query, associates with the application database (A), gets back the results, converts the result in appropriate voice files and plays to the user via telephone line.
   - End equipment is normal phone (H); hence, the signaling is limited (numbers via keypad) and response is in voice format only.
   - The calls are TDM (Time Division Multiplexing) based (billing starts as soon as call is answered). Real time communication is necessary for conventional IVR.
   The communication network (CN) supports only real-time connection in this configuration.
Figure 2 of the accompanying drawings illustrates a schematic illustrating the Packet Interactive Multimedia Response system in accordance with this invention. A phone (H) is used for generating queries and receiving answers. A communication network (CN) establishes the connection between the phone (H) and a server (S). The communication network (CN) is adapted to send and receive data files. The server (S) comprises:
   - a database means (D) adapted to host a variety of data configured and classified for a variety of applications;
   - a web server (W) adapted to interface with said database means (D) and communicate with said phone (H).

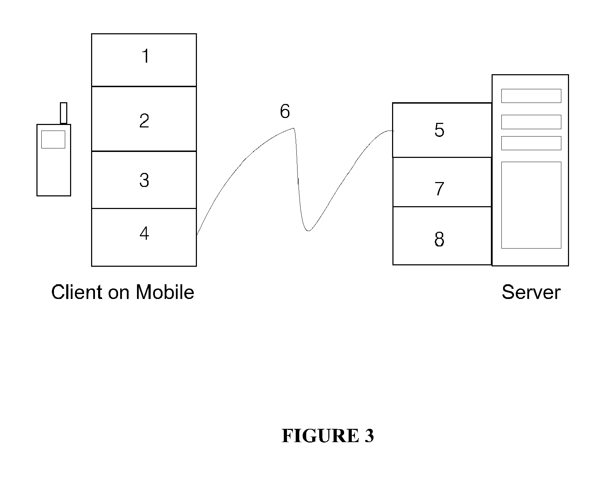

Figure 3 of the accompanying drawings illustrates the proposed architecture for realizing the envisaged functionality, in accordance with this invention. The system envisaged in accordance with this invention comprises a user part (on phone) and server part (on computer). User and server part communicate through a communication network, typically HTTP (Hyper Text Transport Protocol) network. This invention specifically envisages a system for Packet Interactive Multimedia Response (PIM2R) the system comprising
   (a) Playback means for voice/text/multimedia menu to select, distinguish, and segregate different types of queries (1);
   (b) Input means for accepting inputs at the user end (2);
   (c) Query formulation means at the user end (3);
   (d) Transmitter means at the user-end to transmit the formulated query (4);
   (e) Receiver means at the server-end to receive the formulated query (5);
   (f) Interface means to enable connectivity between the transmitter and receiver ends (6);
   (g) Processing means at the server end for executing the query and to obtain appropriate results (7);
   (i) Conversion means at the user end or server end to convert the results of the query in a voice/text/multimedia signal format (8); and
   (j) Playback means at the user end to relay the results to the user.

The system includes downloading means for downloading the various functionalities over the communication network to a user's phone / client device / remote communication device. The system includes an execution means for executing the various functionalities on the phone itself. The interface means (6) is typically a data channel communication network (CN). The remote communication device (Client/ user) is a wireless phone, VOIP, satellite phone, or a mobile phone. The user end gadget is enabled typically with Binary Runtime Environment for Wireless (BREW), thereby enabling downloading applications over the air. The client connects to the server through the Hyper Text Termination Protocol (HTTP) link through the Internet.

The playback means (1) comprises of Prompts and Menus Store at the client side, to store generic voice prompts and text menus in the form of a Menu Tree. The Prompts and Menus Store receives the information from the service provider and the user inputs required data through input means (2). The Prompts and Menus Store provides with the information in an already pre-loaded format. These prompts have generic information supported by the remote communication device and said generic information is typically numbers, currency, months and information requested by the server. The system includes an application scripting means at the client side. The application scripting means includes the query formulation means (3). The application scripting means guides the user to acquire the required information and the actions need to be taken by the IVR server. The application script acts as an interface between the user and the PIM2R system and thus helps in formulation of the query. The system includes a PIM2R engine at the client side. The PIM2R engine receives the menu from the server executes the application script by initiating the application thereby downloading the prompts from the user and sends a query back to the PIM2R server through an HTTP link after accepting inputs from the user. The PIM2R engine receives a response back from the PIM2R server thereby providing the response to the user, which enables playback.

A media interface connects the server over the Internet using the HTTP protocol and provides with session management, the HTTP being used as the network (6). The session management activities provided by the media interface are session establishment, tear down, encryption and the like. The system comprises a processing means (7) and a conversion means (8) at the server side for processing the queries and conversion of the responses in text/ voice or multimedia. The system includes a processing means for executing the PIM2R server side application software. The PIM2R server application on receiving the request from the client interacts with an appropriate syntactically constructed database thereby executing a query. The PIM2R server application after getting back the exact response from the database sends the reply back to the client. The playback means (1) on the client side is local thereby enabling low call charges.

The user input is in the form of digits, letters, special characters provided by the keypad of a mobile device. The user selects a category of information based on the multimedia prompts.

This system provides the following functionalities:
· Upon request by the PIM2R phone, establishing connectivity with server side application;
Accepting the query initiated by the PIM2R application;
Constructing a syntactically correct database query based on the received request;
· Executing the query on the appropriate database;
· Receiving the response from the database;
· Validating and formatting the response;
· Sending the response in proper format to the phone.

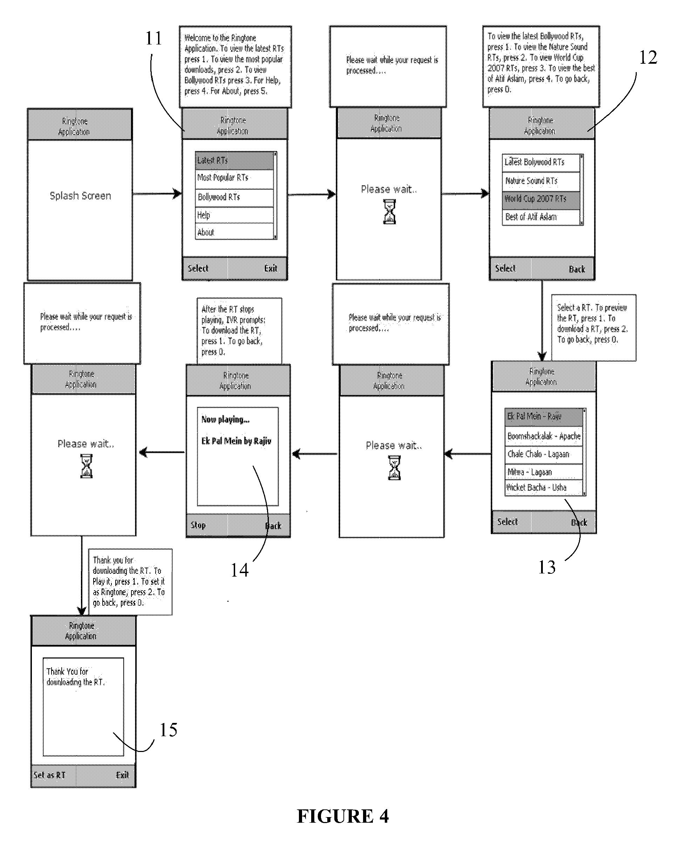

Figure 4 of the accompanying drawings illustrates an example for displaying and selecting a ring tone using the PIM2R module in accordance with this invention.

The present art necessitates a user to connect to a server if he wishes to download a ring tone. In order to download a ring tone, the user first calls a specific number available for such purposes and establishes a connection with the server. The user then needs to identify the ring tone, which he chooses to download from the entire list available with the server. These are typically archived and tagged according to their categories in menus and sub-menus in a cascaded manner. The user, after establishing the call, listens to a voice prompt, which runs through a list of categories in a main menu (11) (for example, 'press 1 to select latest ring tones', 'press 2 to select most popular ring tones', 'press 3 to select bollywood ring tones', and the like voice prompts). The user identifies his first level of choice here (for example, he presses 1 for 'latest ring tone'). The user then encounters a second-layered menu (12) with subcategories in correlation with the previous menu. (for example, 'press 1 for latest bollywood ringtones', 'press 2 for nature sounds', 'press 2 for world cup 2007 ring tones', 'press 3 for best of atif aslam', and the like voice prompts). The user makes his preferred choice here by keying in his response (for example, he presses 3 for world cup ring tones'). The user further encounters a third-layered menu (13) with a list of songs correlating to the options in the previous menu (for example, 'press 1 for ek pal mein - rajiv', 'press 2 for boomshackalak - apache', 'press 3 for chale chalo - lagaan', 'press 4 for mitwa - lagaan', 'press 5 for wicket bacha - usha' and the like voice prompts.) The user chooses his preference (for example, 1 for ek pal mein - rajiv) and now has the option of listening to the ring tone (14) before he requests for download. Finally, the user gets his desired ring tone (15). A variety of problems are encountered while dealing with such prior art menus. Firstly, the user has to be continuously connected to the server until he finishes the required task. This requires him to pay for the airtime costs for the entire procedure. It is highly unreliable as there is no provision for guaranteeing that a call may be completed at all times. Users of mobile phone face the problem of varying range of the service provider in various locations. This is typically a hindrance if the user is not stationary. The server may face downtime. This may lead to complications wherein the user may have called and reached a specific point in his call and the server has failed to identify his request or load the next menu. These results in wastage of airtime resources and the user being charged even for the incomplete call. Any distraction to the user may also lead to the user not able to comprehend or listen to the voice prompt. Many PIM2Rs according to the prior art do not have a facility of replaying the menus or the sub-menus. Even if they do, they are accompanied by a time lag. They also require the user's uncompromised attention for him to be able to retrieve the relation between the number to be keyed in and the various headings in the menu or the submenu. Another problem faced is the traffic congestion. There may be times when the number of users calling the same number exceeds the call handling capacity of the network, or the call handling capacity of the ports available to complete the connection.
This results in the user being kept on hold or being asked to call later. Hence, the conventional IVR method does neither provide for an optimum solution to the user, nor does it facilitate the optimum utilization of the service provider's resources.
The PIM2R in accordance with the present invention envisages overcoming the limitations of the prior art. PIM2R in accordance with this invention allows the loading of the entire ring tone application onto a phone of the user. This application typically comes as a preloaded program onto the SIM card or the phone. Any upgrades to the application can typically be downloaded in the form of patches through the calling network. The user, in this scenario, does not place a call to the server to listen to the options listed in various menus and sub-menus. He runs through and probes the entire list of ring tones and identifies the desired ring tone for download, through the process of reaching the desired ring tone via the menus and sub-menus, the user keys in a set of numbers associated with the headings in the menus and sub-menus and thus formulates a query. Since, the entire process of configuration for formatting a query is done locally on the phone itself without involving any network resources, the user saves on a large part of the airtime charges. He also has the option to divert his attention to other important tasks at hand with the facility of returning to the query formulation at a later stage.

The formatted query is now relayed to the server equipped with a database and adapted to respond to the query. This relaying is done in the form of packets in accordance with the system of this invention. The server then relays the specific ring tone for download to the user's phone. PIM2R can be extended from voice-based prompts and responses to text and multimedia based prompts and responses too. The user's phone, in accordance with this invention can also be extended to support multiple languages and multiple dialects so that all applications may be heard in the user-selected language and dialect. The system in accordance with this invention hence provides for optimum utilization of the network resources, lesser charges to the user.

The system in accordance with this invention may be adapted to cater to the following range of applications:
At present, one of the ways the contests are conducted is based on standard PIM2R functionality, where in questions are voice based and the contest is of on-line nature. In accordance with one exemplary embodiment of this invention, the system can be used for hosting similar contests having multimedia questions in either off-line or on-line mode. Contestants may be guided by voice menu in a language selected by him. Contesting PIM2R is an electronic system that plays questions to the user in voice format, takes user inputs (answers) in number format and plays the result back in voice format to the contestant, Horoscopes are provided to the user based on his zodiac sign, birth data, birth time and the like in various languages. In accordance with another exemplary embodiment of this invention, the system can be used for providing a user interface through which the horoscope and predictions will be fetched from the server, voice prompts will be played, and the readings (text /images format) will be displayed on the phone screen.
In accordance with another exemplary embodiment of this invention, the system can be used for providing a search application where a user can search for Songs/Videos/Wallpapers and the like downloadable features with voice based menus and ability to preview before download. The voice menus and instructions are available in various languages. PIM2R will be the user interface through which the application menus will be fetched from the server, voice prompts will be played, and the Songs / Wallpapers 1 Videos will be displayed on the phone screen.

In accordance with yet another exemplary embodiment of this invention, the system can be used for providing an application which allows a user to download the daily joke 1 thought ***1*** shayari / poem and the like through voice based menus and in various languages. PIM2R will be the user interface through which the prompts will be fetched from the server, voice prompts will be played, and the joke 1 thought/ poem (text/images format) will be displayed on the phone screen.

In accordance with yet another exemplary embodiment of this invention, the system can be used, wherein a user can vote / poll for reality based / award shows / polls hosted by news channels through voice menus, options and instructions in a language of his choice. PIM2R will be the user interface through which the polls will be fetched from the server, voice prompts will be played, and the polls (video/audio/text/images format) will be displayed on the phone screen.

In accordance with still another exemplary embodiment of this invention, the system can be used, wherein users can get the latest update on scores for ongoing matches I matches happened in last week. PIM2R will be the interface through which the results 1 live scores will be fetched from the server having the relevant data, voice prompts will be played, and the information (video/audio/text/images format) will be displayed on the phone screen.

In accordance with an additional exemplary embodiment of this invention, the system can be used, wherein students giving these entrance exams can use an application for learning word pronunciations, meanings, synonyms, antonyms, tests for the same, etc. PIM2R will be the user interface through which the wordlists and tests will be fetched from the server, voice prompts will be played, and the wordlists/tests (audio/text format) will be displayed on the phone screen.

In accordance with yet another exemplary embodiment of this invention, the system can be used for providing English learning lessons to illiterate people. PIM2R will be the user interface through which the lessons will be fetched from the server, voice prompts will be played, and the lessons (audio/text format) will be displayed on the phone screen.

In accordance with an additional exemplary embodiment of this invention, the system can be used for students to take Objective type questions having multiple choice answers tests. PIM2R will be the user interface through which the questions will be fetched from the server, voice prompts will be played, and the questions (audio/text/images format) will be displayed on the phone screen.

In accordance with still another exemplary embodiment of this invention, the system can be used for providing latest shares, commodities, and equities information to users in a language choice of their own. PIM2R will be the user interface through which the latest information will be fetched from the server, voice prompts will be played, and the information (audio/text/images format) will be displayed on the phone screen. It will then securely make the trading transactions after receiving user confirmation.

In accordance with still another exemplary embodiment of this invention, the system can be used for providing the latest weather information and predictions to users in a language choice of their own. PIM2R will be the user interface through which the latest information and predictions will be fetched from the server, voice prompts will be played, and the questions (audio/text/images format) will be displayed on the phone screen.

In accordance with yet another exemplary embodiment of this invention, the system can be used for providing latest headlines and news items across the world and across different categories like sports, entertainment, politics, etc. to users in a language choice of their own. PIM2R will be the user interface through which the information will be fetched from the server, voice prompts will be played, and the questions (video/audio/text/images format) will be displayed on the phone screen.

In accordance with yet another exemplary embodiment of this invention, the system can be used for providing a selection means wherein, a user can select the category of information he / she requires based on the PIM2R voice prompts and can navigate to reach the desired information with user interface being PIM2R. The information in the end can be rendered to the user in multimedia format (Voice, text, images) as per the user choice. The application based on PIM2R can also be integrate in a layered fashion while navigating the information leading to buy and sell.

In accordance with still another exemplary embodiment of this invention, the system can be used for providing appropriate information to the customers dialing call center across the types of call center and various services offered in language of user's choice. The information can be multimedia. PIM2R will be the user interface through which the information will be fetched from the server, voice prompts will be played, and the information (video/audio/text/images format) will be rendered on the phone. One instance of this application can be "Prepaid Balance Information" provided to the users by Telecom Service Providers using Packet interactive multimedia response (PIM2R) / call center.

In accordance with yet another exemplary embodiment of this invention, the system can be used for providing latest schedules to users in a language choice of their own and allows them to make bookings for the same. Packet interactive multimedia response (PIM2R) will be the user interface through which the latest schedules and pricing information will be fetched from the server, voice prompts will be played, and the information (audio/text/images format) will be displayed on the phone screen. It will then securely make the transactions after receiving user confirmation.

In accordance with yet another exemplary embodiment of this invention, the system can be used for providing a means for users to pay utility bills like Electricity, Telephone, Gas bookings, Mobile Bills, etc. guiding them through a voice based menu in a language of their choice. Packet interactive multimedia response (PIM2R) will be the user interface, through which the voice prompts will be played, and the choices (audio/text/images format) will be displayed on the phone screen and the inputs will be taken from the user in numerical format. It will then securely make the transactions after receiving user confirmation.

In accordance with still another exemplary embodiment of this invention, the system can be used for instructing the user of safety, precautionary, relief or the like measures in the face of a disaster. For example, when a disaster like Tsunami strikes it is important to reach the affected persons wherever they are. In accordance with the invention of the PIM2R technology, an application which can be instantiated remotely and user guided by the PIM2R interface to do what next and the like instructions.

It should be understood that the programs, processes, methods and systems described herein are not related or limited to any particular type of computer or network system (hardware or software), unless indicated otherwise. Various types of general purpose or specialized computer systems may be used with or perform operations in accordance with the teachings described herein.

In view of the wide variety of embodiments to which the principles of the present invention can be applied, it should be understood that the illustrated embodiments are exemplary only. The illustrated embodiments should not be taken as limiting the scope of the present invention. For example, the interactions between the components may be taken in sequences other than those described, and more or fewer elements may be used in-the block diagrams. While various elements of the preferred embodiments have been described as being implemented in software, in other embodiments hardware or firmware implementations may alternatively be used, and vice-versa.

## Claims

1. A system for Packet Interactive Multimedia Response (PIM2R) the system comprising
(a) playback means for voice/text/multimedia menu to select, distinguish, and segregate different types of queries;
(b) input means for accepting inputs at the user end;
(c) query formulation means at the user end
(d) transmitter means at the user-end to transmit the formulated query;
(e) receiver means at the server-end to receive the formulated query;
(f) interface means to enable connectivity between the transmitter and receiver ends;
(g) processing means at the server end for executing the query, obtain appropriate results and sending it back to user end;
(i) conversion means at the server end or users end to convert the results of the query in a voice/text/multimedia signal format; and
(j) playback means at the user end to relay the results to the user.

2. A system for Packet Interactive Multimedia Response (PIM2R) as claimed in claim 1 wherein the system includes downloading means for the functionalities of a, b, c, d, j and i over a communication network to a users phone / client device / remote communication device.

3. A system for Interactive Multimedia Response (PIM2R) as claimed in claim 1 or 2 wherein the system includes
an execution means for executing the functionalities of a, b, c, j and i on the phone itself; and/or
an execution means for executing the functionality of g on the machine hosting IVR server side application.

4. A system for Interactive Multimedia Response (PIM2R) as claimed in any preceding claim wherein the system includes an Interactive voice server (IVR) to carry out the functionalities of e, g & i (in case conversion is done at the server end).

5. A system for packet interactive multimedia response as claimed in any preceding claim wherein the interface means is data channel communication network (CN).

6. A system for packet interactive multimedia response as claimed in any preceding claim wherein the remote communication device is a wireless phone, VOIP, satellite phone, or a mobile phone.

7. A system for packet interactive multimedia response as claimed in claim 6 wherein the user end gadget is enabled with Binary Runtime Environment for Wireless (BREW), thereby enabling downloading applications over the air.

8. A system for packet interactive multimedia response as claimed in any preceding claim wherein the remote communication system comprises a Prompts and Menus Store at the client side.

9. A system for packet interactive multimedia response as claimed in claim 8 wherein the Prompts and Menus Store
stores generic voice prompts and text menus in the form of a Menu Tree; and/or
is adapted to receive generic voice prompts and text menus in the form of a Menu Tree from a service provider; and/or
provides generic voice prompts and text menus in the form of a Menu Tree in an already pre-loaded format.

10. A system for packet interactive multimedia response as claimed in claim 9 wherein the prompts have generic information supported by the remote communication device.

11. A system for packet interactive multimedia response as claimed in any preceding claim wherein the system includes an application scripting means at the client side.

12. A system for packet interactive multimedia response as claimed in claim 11 wherein the application scripting means
is adapted to guide a user to acquire the required information and the actions need to be taken by the IVR server; and/or
acts as an interface between the user and the PIM2R system.

13. A system for packet interactive multimedia response as claimed in any preceding claim wherein the system includes an PIM2R engine at the client side.

14. A system for packet interactive multimedia response as claimed in claim 13 wherein the PIM2R engine is adapted to receive a menu from the server for execution of the application scripting means by initiating an application thereby downloading prompts from local prompt store.

15. A system for packet interactive multimedia response as claimed in claim 13 wherein the PIM2R engine is adapted to send a query back to the PIM2R server through an HTTP link after accepting inputs from a user.

16. A system for packet interactive multimedia response as claimed in claim 15 wherein the PIM2R engine is adapted to receive a response back from the PIM2R server and is further adapted to provide a response to the user, to enable playback.

17. A system for packet interactive multimedia response as claimed in any preceding claim wherein the system includes a media interface.

18. A system for packet interactive multimedia response as claimed in claim 17 wherein the media interface connects the server over the Internet using the HTTP protocol and provides with session management, the HTTP being used as the transport medium.

19. A system for packet interactive multimedia response as claimed in claim 18 wherein the session management activities provided by the media interface include session establishment, tear down, encryption and the like.

20. A system for packet interactive multimedia response as claimed in any preceding claim wherein the data network is the transport medium.

21. A system for packet interactive multimedia response as claimed in any preceding claim wherein the system includes:-
a database (D) to host and classify applications; and/or
a PIM2R server application; and/or
a web server (W) for interfacing the PIM2R server and the database (D).

22. A system for packet interactive multimedia response as claimed in claim 21 wherein the system includes a computer means for executing the PIM2R server side application software.

23. A system for packet interactive multimedia response as claimed in claim 21 or 22 wherein the PIM2R server application is adapted to on receiving the request from the client to interact with an appropriate syntactically constructed database thereby executing a query.

24. A system for packet interactive multimedia response as claimed in claim 23 wherein the PIM2R server application is adapted to after getting back the exact response from the database send a reply back to the client.

25. A system for packet interactive multimedia response as claimed in claim 16 wherein the playback on the client side is local thereby enabling low call charges.

26. A system for packet interactive multimedia response as claimed in any preceding claim wherein the system includes selection means.

27. A system for packet interactive multimedia response as claimed in claim 26 wherein the system comprises PIM2R as an interface means.

28. A system for packet interactive multimedia response as claimed in claim 27 wherein the PIM2R application is adapted to integrate in a layered format and/or wherein the PIM2R prompts are in audio/video/text/image formats.

29. A method for packet interactive multimedia response the method comprising the following steps
(a) installing the requisite functionality of an PIM2R application on the server
(b) downloading an PIM2R BREW client to a Binary Runtime Environment for Wireless (BREW) compatible phone which essentially downloads the PIM2R menu, application script and voice prompts
(c) starting the BREW application on the phone
(d) involving the user to formulate a query by accessing the multiple-layered PIM2R menu
(e) formulating a final query based on audio/video/text inputs from the user
(f) establishing connectivity of the BREW client application with the server via http or via sockets
(g) collating the data entered by the user on the phone
(l) sending the final formulated query to a database via web server
(m) responding to the query by the database with appropriate data
(n) sending the data to BREW PIM2R client by the PIM2R server
(o) displaying the data to the user by the PIM2R client application in the form of audio/video/text format; and
(p) disconnection by user.

30. A method for packet interactive multimedia response as claimed in claim 29 wherein the BREW enables the user to download applications over the air.

31. A method for packet interactive multimedia response as claimed in claim 29 wherein the generic voice prompts and text menus are provided by the prompts and menus store at the client end, the prompts and menus being pre-downloadable in a menu tree layered format.

32. A method for packet interactive multimedia response as claimed in claim 29 wherein after initialization of the application the menu is locally played on the clients phone itself.

33. A method for packet interactive multimedia response as claimed in claim 29 wherein the user creates his own query with the help of an interactive menu.

34. A method for packet interactive multimedia response as claimed in claim 33 wherein an HTTP link is established over a data network for sending the query created by the user to the PIM2R server; typically by a media interface.

35. A method as claimed in claim 29 wherein the local playback / formatting a query at the users end is done offline thereby causing a lesser telephone charge.

36. A method as claimed in any one of claims 29 to 35 wherein the data is transferred over the communication channel as data packets /files; and/or wherein PIM2R is hosted in multiple languages and multiple dialects.
